# EUROPEAN PATENT APPLICATION

(11) **EP 4 841 717 A1**
(43) Date of publication of application: **18.11.2026**
(21) Application number: 26178713.9
(22) Date of filing: 13.05.2026
(51) Int. Cl.: H01M 4/62, H01M 10/052

(54) **BINDER FOR SECONDARY BATTERY ELECTRODE AND SECONDARY BATTERY INCLUDING SAME**

(30) Priority: 14.05.2025 KR 20250062578
(71) Applicant: Hansol Chemical Co., Ltd, Seoul 06169 (KR)
(72) Inventor: OH, Sang-Yeop, 54524 Iksan-si (KR); AN, Su-Hyeon, 54524 Iksan-si (KR); SEONG, Hoon-Moh, 54524 Iksan-si (KR); YOON, Nam-Sun, 54524 Iksan-si (KR); LEE, So-Jeong, 54524 Iksan-si (KR); KIM, Hee-Jeong, 54524 Iksan-si (KR); KIM, Kwang-In, 54524 Iksan-si (KR); KWON, Se-Man, 54524 Iksan-si (KR)
(74) Representative: Ipsilon

(57) **Abstract**

Proposed is a binder, including a first monomer unit including a (meth)acrylate-based monomer unit having a linear hydrocarbon side chain with 1 to 12 carbon atoms, a vinyl-based monomer unit having an acyl group, or a combination thereof, and a second monomer unit including a (meth)acrylate-based monomer unit having a branched or cyclic hydrocarbon side chain with 3 or more carbon atoms, a vinyl-based monomer unit having one or more aromatic ring side chains, or a combination thereof. A slurry including the binder, an electrode, and a secondary battery are also proposed.

## Description

### BACKGROUND OF THE INVENTION

### Field of the Invention

The present disclosure relates to a binder for a secondary battery electrode, the binder including a copolymer having a (meth)acrylate-based monomer unit, and to a slurry including the same, an electrode to which the binder is applied, and a secondary battery including the electrode.

### Description of the Related Art

Lithium secondary batteries, due to their high energy density, are widely used as compact power sources for portable devices in the fields of electronics, telecommunications, and computing. Recently, their application range has expanded to large-capacity batteries for hybrid electric vehicles (HEVs) and electric vehicles (EVs). To realize high-capacity and long-life batteries, it is desirable to maximize the contents of active materials and conductive agents within an electrode while minimizing the binder content. However, excessive reduction of binder content generally leads to poor dispersibility of the active material/conductive agent, as well as weakened electrode adhesiveness and poor electrode layer flexibility. Consequently, the active material becomes detached from a current collector during repeated charge-discharge cycles, resulting in degradation of cycle performance. Accordingly, there is a demand for a high-performance binder capable of simultaneously ensuring dispersion stability, electrode plate adhesiveness, and electrode plate flexibility, even with a small amount.

Polyvinylidene fluoride (PVDF), a representative fluorine-based binder, undergoes low swelling in electrolyte solutions, thereby facilitating maintenance of electrode structural integrity. However, PVDF suffers from insufficient dispersibility of conductive agents and relatively weak electrode adhesiveness. Furthermore, due to its highly stable perfluorinated polymer structure, it is resistant to natural degradation, leading to environmental accumulation and potential physiological concerns. Meanwhile, non-fluorinated binders such as hydrogenated acrylonitrile-butadiene rubber (H-NBR) offers improved flexibility, but still fail to achieve sufficient adhesiveness.

Therefore, there is a need for a binder that can overcome the limitations of the related art by simultaneously achieving excellent dispersibility of electrode active materials/conductive agents, electrode plate adhesiveness, and flexibility with minimal addition, while avoiding the intrinsic drawbacks of fluorine-based binders. Such a binder may be prepared using (meth)acrylate-based and vinyl-based monomers. However, conventional binders prepared from (meth)acrylate-based and vinyl-based monomers are required to be soluble in slurry solvents while remaining insoluble in electrolyte solutions. In practice, an increase in solubility in slurry solvents often leads to a concomitant increase in solubility in electrolyte solutions, making it difficult to achieve the desired properties.

In an effort to address this issue, a binder of the present disclosure introduces bulky side-chain functional groups with significant steric hindrance while maintaining affinity for slurry solvents, thereby effectively suppressing solubility in electrolyte solutions. Additionally, by precisely controlling the content of sterically hindered functional groups and polar functional groups, a balanced combination of degree of swelling in electrolyte solution and adhesiveness is achieved, thereby significantly improving the initial coulombic efficiency and cycle life of lithium secondary batteries.

The foregoing is intended merely to aid in the understanding of the background of the present disclosure, and is not intended to mean that the present disclosure falls within the purview of the related art that is already known to those skilled in the art.

### Documents of Related Art

(Patent document 1) Korean Patent Application Publication No. 10-2016-0040125

### SUMMARY OF THE INVENTION

Accordingly, the present disclosure has been made keeping in mind the above problems occurring in the related art, and one objective of the present disclosure is to provide a fluorine-free binder capable of suppressing excessive dissolution and swelling in an electrolyte solution while maintaining slurry processability, thereby simultaneously improving the initial coulombic efficiency and cycle life of a lithium secondary battery without deteriorating adhesiveness.

Additionally, another objective of the present disclosure is to provide a slurry composition capable of enhancing the performance of a secondary battery by using the binder.

Furthermore, still another objective of the present disclosure is to provide an electrode to which the slurry composition is applied and exhibiting excellent performance, and a low-cost, high-performance secondary battery including the same.

However, the objectives of the present disclosure are not limited to those mentioned above, and other objectives not mentioned will be clearly understood by those skilled in the art from the description provided hereinafter.

In order to achieve the above objectives, according to one aspect of the present disclosure, there is provided a binder, including: a first monomer unit including a (meth)acrylate-based monomer unit having a linear hydrocarbon side chain with 1 to 12 carbon atoms, a vinyl-based monomer unit having an acyl group, or a combination thereof; and a second monomer unit including a (meth)acrylate-based monomer unit having a branched hydrocarbon side chain with 3 or more carbon atoms, a cyclic hydrocarbon side chain with 3 or more carbon atoms, or a combination thereof, a vinyl-based monomer unit having one or more aromatic ring side chains, or a combination thereof.

According to another aspect of the present disclosure, the binder may further include: a third monomer unit including a (meth)acrylate-based monomer unit having a polar functional group substituted with a heteroatom, a vinyl-based monomer unit having a polar functional group substituted with a heteroatom, or a combination thereof,
According to another aspect of the present disclosure, there is provided a slurry, including: the binder; and an active material.

According to another aspect of the present disclosure, there is provided an electrode, including: a current collector; and an active material layer formed on the current collector and including the binder.

According to another aspect of the present disclosure, there is provided a secondary battery, including: the electrode.

The binder according to the present disclosure can suppress excessive dissolution and swelling in an electrolyte solution while maintaining slurry processability, thereby simultaneously improving the initial coulombic efficiency and cycle life of a lithium secondary battery without deteriorating adhesiveness.

Furthermore, the improved adhesiveness of the binder according to the present disclosure enables a reduction in the content of the binder while increasing the contents of an active material and a conductive agent, thereby providing a lithium secondary battery with high energy density at low cost.

### DETAILED DESCRIPTION OF THE INVENTION

Hereinafter, the operation and effect of the present disclosure will be described in more detail through specific embodiments of the present disclosure. However, these embodiments are provided only for illustrative purposes and not intended for limiting the scope of the present disclosure.

All terms or words used in the specification and claims have the same meaning as commonly understood by one of ordinary skill in the art to which inventive concepts belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Therefore, embodiments disclosed herein are merely preferred examples of the present disclosure and do not fully describe the technical idea of the present disclosure, so it will be appreciated that there can be various equivalents and alterations thereto at a filing date of the present application.

As used herein, the singular forms are intended to include the plural forms as well, unless the context clearly indicates otherwise. It will be further understood that the terms "comprise", "include", "have", etc., when used in this specification, specify the presence of stated features, integers, steps, operations, elements, components, and/or combinations thereof but do not preclude the presence or addition of one or more other features, integers, steps, operations, elements, components, and/or combinations thereof.

In this specification, "a to b" and "a~b" indicating a numerical range are defined as ≥ a and ≤ b.

A binder according to one aspect of the present disclosure may include: a first monomer unit including a (meth)acrylate-based monomer unit having a linear hydrocarbon side chain with 1 to 12 carbon atoms, a vinyl-based monomer unit having an acyl group, or a combination thereof; and a second monomer unit including a (meth)acrylate-based monomer unit having a branched hydrocarbon side chain with 3 or more carbon atoms, a cyclic hydrocarbon side chain with 3 or more carbon atoms, or a combination thereof, a vinyl-based monomer unit having one or more aromatic ring side chains, or a combination thereof.

In one embodiment of the present disclosure, the binder may be a block copolymer or a random copolymer.

The (meth)acrylate-based monomer refers to a monomer having a basic skeleton of an α,β-unsaturated ester structure represented by CH₂=CR¹C(=O)OR² (wherein R¹ is H or CH₃, and R² is a hydrocarbon group or a substituted hydrocarbon group)

The vinyl-based monomer refers to a monomer that directly includes a terminal vinyl group, CH₂=CHX (wherein X is a linking atom that connects a substituent group via C, O, N, or the like), in its main chain and does not have a (meth)acrylate structure.

For example, the acyl group may be a linear aliphatic acyl group having 1 to 12 carbon atoms.

In another example, the vinyl-based monomer unit having the linear aliphatic acyl group with 1 to 12 carbon atoms may be formed by polymerization of vinyl acetate.

In one embodiment of the present disclosure, the number of carbon atoms in the branched or cyclic hydrocarbon side chain having 3 or more carbon atoms may be 3 to 22.

For example, the number of carbon atoms in the branched or cyclic hydrocarbon side chain may be 3 to 20, 3 to 18, 3 to 15, or 3 to 12.

In one embodiment of the present disclosure, the cyclic side chain having 3 or more carbon atoms may include a heteroatom such as oxygen or nitrogen within its ring.

In one embodiment of the present disclosure, the (meth)acrylate-based monomer unit having the cyclic hydrocarbon side chain with 3 or more carbon atoms may include a (meth)acrylate-based monomer unit having an aliphatic cyclic hydrocarbon side chain with 3 or more carbon atoms, a (meth)acrylate-based monomer unit having one or more aromatic ring side chains, or a combination thereof.

In one embodiment of the present disclosure, the binder may further include a third monomer unit including a (meth)acrylate-based monomer unit having a polar functional group substituted with a heteroatom, a vinyl-based monomer unit having a polar functional group substituted with a heteroatom, an α,β-unsaturated dicarboxylic acid-based monomer unit, or a combination thereof.

In one embodiment of the present disclosure, the polar functional group may be a carboxylic acid group (-COOH), a sulfonic acid group (-SO₃H), a phosphonic acid group (-PO₃H₂), a cyano group (-CN), a pyrrolidone group (-C₄H₆NO), an amide group (-CONH₂), a hydroxyl group (-OH), an epoxy group (-C₃H₅O), a caprolactam group (-C₆H₁₀NO), an oxazolidone group (-C₃H₄NO₂), or a combination thereof.

The α,β-unsaturated dicarboxylic acid-based monomer refers to a monomer having an unsaturated dicarboxylic acid structure including a double bond between the α-carbon and the β-carbon and containing two or more carboxylic acid groups (-COOH), and may include anhydride, salt, or ester thereof.

For example, the polar functional group may be a carboxylic acid group (-COOH), a sulfonic acid group (-SO₃H), a phosphonic acid group (-PO₃H₂), a cyano group (-CN), or a combination thereof.

In one embodiment of the present disclosure, the first monomer unit may be formed by polymerization of methyl (meth)acrylate, ethyl (meth)acrylate, n-propyl (meth)acrylate, n-butyl (meth)acrylate, n-pentyl (meth)acrylate, n-hexyl (meth)acrylate, n-heptyl (meth)acrylate, n-octyl (meth)acrylate, n-nonyl (meth)acrylate, n-decyl (meth)acrylate, n-undecyl (meth)acrylate, n-lauryl (meth)acrylate, vinyl acetate, or a combination thereof.

For example, the first monomer unit may be formed by polymerization of n-butyl (meth)acrylate, ethyl (meth)acrylate, n-lauryl (meth)acrylate, vinyl acetate, methyl (meth)acrylate, n-propyl (meth)acrylate, n-pentyl (meth)acrylate, n-hexyl (meth)acrylate, n-heptyl (meth)acrylate, n-octyl (meth)acrylate, or a combination thereof.

In another example, the first monomer unit may be formed by polymerization of n-butyl (meth)acrylate, ethyl (meth)acrylate, n-lauryl (meth)acrylate, vinyl acetate, or a combination thereof.

In one embodiment of the present disclosure, the branched or aliphatic cyclic hydrocarbon side chain having 3 or more carbon atoms may be iso-propyl, iso-butyl, iso-pentyl, tert-butyl, neopentyl, 2-ethylhexyl, isooctyl, cyclohexyl, isobornyl, tert-pentyl, tert-hexyl, 3-methylbutyl, 2-propylheptyl, cycloheptyl, norbornyl, or a combination thereof.

In one embodiment of the present disclosure, the (meth)acrylate-based monomer unit having the branched hydrocarbon side chain with 3 or more carbon atoms, aliphatic cyclic hydrocarbon side chain with 3 or more carbon atoms, or a combination thereof, may be formed by polymerization of iso-propyl (meth)acrylate, iso-butyl (meth)acrylate, iso-pentyl (meth)acrylate, tert-butyl (meth)acrylate, neopentyl (meth)acrylate, 2-ethylhexyl (meth)acrylate, iso-octyl (meth)acrylate, iso-nonyl (meth)acrylate, iso-decyl (meth)acrylate, iso-lauryl (meth)acrylate, cyclopentyl (meth)acrylate, cyclohexyl (meth)acrylate, isobornyl (meth)acrylate, dicyclopentadienyl (meth)acrylate, tetrahydrofurfuryl (meth)acrylate, or a combination thereof.

For example, the (meth)acrylate-based monomer unit having the branched or aliphatic cyclic hydrocarbon side chain with 3 or more carbon atoms may be formed by polymerization of tert-butyl (meth)acrylate, 2-ethylhexyl (meth)acrylate, isobornyl (meth)acrylate, iso-octyl (meth)acrylate, iso-nonyl (meth)acrylate, iso-decyl (meth)acrylate, cyclohexyl (meth)acrylate, dicyclopentadienyl (meth)acrylate, tetrahydrofurfuryl (meth)acrylate, or a combination thereof.

In another example, the (meth)acrylate-based monomer unit having the branched or aliphatic cyclic hydrocarbon side chain with 3 or more carbon atoms may be formed by polymerization of tert-butyl (meth)acrylate, 2-ethylhexyl (meth)acrylate, isobornyl (meth)acrylate, or a combination thereof.

In one embodiment of the present disclosure, the (meth)acrylate-based monomer unit having one or more aromatic ring side chains may be formed by polymerization of benzyl (meth)acrylate, phenyl (meth)acrylate, 3-phenoxybenzyl (meth)acrylate, o-phenylphenoxyethyl (meth)acrylate, 1-naphthyl (meth)acrylate, or a combination thereof.

For example, the (meth)acrylate-based monomer unit having one or more aromatic ring side chains may be formed by polymerization of benzyl (meth)acrylate, phenyl (meth)acrylate, 3-phenoxybenzyl (meth)acrylate, or a combination thereof.

In one embodiment of the present disclosure, the vinyl-based monomer unit having one or more aromatic ring side chains may be formed by polymerization of styrene, α-methylstyrene, or a combination thereof.

For example, the vinyl-based monomer unit having one or more aromatic ring side chains may be formed by polymerization of styrene.

In one embodiment of the present disclosure, the third monomer unit may be formed by polymerization of methacrylic acid, acrylic acid, N-vinylpyrrolidone, acrylonitrile, 2-hydroxyethyl methacrylate, 2-hydroxyethyl acrylate, acrylamide, N,N-dimethylacrylamide, glycidyl methacrylate, N-vinylcaprolactam, 2-oxazolidin-5-yl methacrylate, 2-cyanoethyl methacrylate, 2-acrylamido-2-methylpropane sulfonic acid, carboxyethyl acrylate, maleic acid, itaconic acid, fumaric acid, aconitic acid, vinylbenzoic acid, vinyl sulfonic acid, 4-styrenesulfonic acid, vinyl phosphonic acid, N-methyl acrylamide, or a combination thereof.

For example, the third monomer unit may be formed by polymerization of methacrylic acid, N-vinylpyrrolidone, acrylic acid, acrylonitrile, 2-hydroxyethyl methacrylate, glycidyl methacrylate, or a combination thereof.

In another example, the third monomer unit may be formed by polymerization of methacrylic acid, N-vinylpyrrolidone, or a combination thereof.

In one embodiment of the present disclosure, the binder may include 20 to 80 mol% of the first monomer unit, 20 to 80 mol% of the second monomer unit, and 0 to 15 mol% of the third monomer unit, based on a total of 100 mol% of the first monomer unit, the second monomer unit, and the third monomer unit.

For example, the binder may include the first monomer unit in an amount of 20 to 70 mol%, 25 to 80 mol%, 25 to 70 mol%, 20 to 30 mol%, 30 to 50 mol%, 50 to 70 mol%, 20 to 25 mol%, 25 to 45 mol%, or 45 to 65 mol%, based on a total of 100 mol% of the first monomer unit, the second monomer unit, and the third monomer unit.

When the amount of the first monomer unit exceeds the above-described range, excessive electrolyte uptake within a battery may reduce interfacial adhesiveness and cause detachment from the current collector. Additionally, the slurry viscosity may increase sharply, resulting in non-uniform coating thickness and deterioration in electrode dimensional stability.

On the other hand, when the amount of the first monomer unit falls below the above-described range, the adhesiveness at both the binder-current collector and binder-active material interfaces may be insufficient, leading to facile delamination of the electrode layer and the formation of microcracks. Consequently, the internal resistance may increase and the output characteristics may be degraded.

For example, the binder may include the second monomer unit in an amount of 20 to 75 mol%, 25 to 80 mol%, 25 to 75 mol%, 20 to 35 mol%, 35 to 55 mol%, 55 to 68 mol%, 68 to 73 mol%, 73 to 80 mol%, 20 to 30 mol%, 30 to 50 mol%, 50 to 65 mol%, 65 to 70 mol%, or 70 to 75 mol%, based on a total of 100 mol% of the first monomer unit, the second monomer unit, and the third monomer unit.

When the amount of the second monomer unit exceeds the above-described range, the flexibility of the electrode film may decrease, and cracks may be generated during drying and repeated charge-discharge processes. On the other hand, when the amount of the second monomer unit falls below the above-described range, increased electrolyte uptake and swelling may lead to volumetric instability of the electrode. Additionally, the adhesiveness within a battery may decrease, causing active material detachment from the current collector and increasing the likelihood of surface crack formation.

For example, the binder may include the third monomer unit in an amount of 2 to 15 mol%, 0 to 13 mol%, 2 to 13 mol%, 0 to 5 mol%, 5 to 10 mol%, 10 to 15 mol%, 0 to 7 mol%, 7 to 12 mol%, or 12 to 15 mol%, based on a total of 100 mol% of the first monomer unit, the second monomer unit, and the third monomer unit.

When the amount of the third monomer unit exceeds the above-described range, the binder may undergo gelation, and the slurry viscosity may increase sharply, thereby deteriorating coatability. Additionally, the degree of swelling in electrolyte solution may also increase. Accordingly, it is desirable to incorporate the third monomer unit in a small amount to achieve improved adhesiveness while minimizing increases in slurry viscosity and swelling behavior.

In one embodiment of the present disclosure, the binder may be free of fluorine atoms and may not generate hydrogen fluoride during charge and discharge processes of a battery in which the binder is used.

On the contrary, conventionally commercialized PVDF-based binders contain fluorine atoms and may generate hydrogen fluoride during charge and discharge processes, which is problematic.

In one embodiment of the present disclosure, the binder may include 62 to 68 mol% of n-butyl (meth)acrylate, 17 to 23 mol% of 2-ethylhexyl (meth)acrylate, 7 to 13 mol% of isobornyl (meth)acrylate, and 2 to 8 mol% of methacrylic acid, based on a total of 100 mol% of the first monomer unit, the second monomer unit, and the third monomer unit.

In one embodiment of the present disclosure, the binder may include 42 to 48 mol% of n-butyl (meth)acrylate, 17 to 23 mol% of 2-ethylhexyl (meth)acrylate, 27 to 33 mol% of isobornyl (meth)acrylate, and 2 to 8 mol% of methacrylic acid, based on a total of 100 mol% of the first monomer unit, the second monomer unit, and the third monomer unit.

In one embodiment of the present disclosure, the binder may include 22 to 28 mol% of n-butyl (meth)acrylate, 17 to 23 mol% of 2-ethylhexyl (meth)acrylate, 47 to 53 mol% of isobornyl (meth)acrylate, and 2 to 8 mol% of methacrylic acid, based on a total of 100 mol% of the first monomer unit, the second monomer unit, and the third monomer unit.

In one embodiment of the present disclosure, the binder may include 22 to 28 mol% of ethyl (meth)acrylate, 17 to 23 mol% of 2-ethylhexyl (meth)acrylate, 47 to 53 mol% of isobornyl (meth)acrylate, and 2 to 8 mol% of methacrylic acid, based on a total of 100 mol% of the first monomer unit, the second monomer unit, and the third monomer unit.

In one embodiment of the present disclosure, the binder may include 22 to 28 mol% of n-lauryl (meth)acrylate, 17 to 23 mol% of 2-ethylhexyl (meth)acrylate, 47 to 53 mol% of isobornyl (meth)acrylate, and 2 to 8 mol% of methacrylic acid, based on a total of 100 mol% of the first monomer unit, the second monomer unit, and the third monomer unit.

In one embodiment of the present disclosure, the binder may include 22 to 28 mol% of vinyl acetate, 17 to 23 mol% of 2-ethylhexyl (meth)acrylate, 47 to 53 mol% of isobornyl (meth)acrylate, and 2 to 8 mol% of methacrylic acid, based on a total of 100 mol% of the first monomer unit, the second monomer unit, and the third monomer unit.

In one embodiment of the present disclosure, the binder may include 22 to 28 mol% of n-butyl (meth)acrylate, 17 to 23 mol% of 2-ethylhexyl (meth)acrylate, 47 to 53 mol% of styrene, and 2 to 8 mol% of methacrylic acid, based on a total of 100 mol% of the first monomer unit, the second monomer unit, and the third monomer unit.

In one embodiment of the present disclosure, the binder may include 23 to 27 mol% of n-butyl (meth)acrylate, 17 to 23 mol% of 2-ethylhexyl (meth)acrylate, and 52 to 58 mol% of isobornyl (meth)acrylate, based on a total of 100 mol% of the first monomer unit, the second monomer unit, and the third monomer unit.

In one embodiment of the present disclosure, the binder may include 22 to 28 mol% of n-butyl (meth)acrylate, 17 to 23 mol% of 2-ethylhexyl (meth)acrylate, 42 to 48 mol% of isobornyl (meth)acrylate, and 7 to 13 mol% of methacrylic acid, based on a total of 100 mol% of the first monomer unit, the second monomer unit, and the third monomer unit.

In one embodiment of the present disclosure, the binder may include 22 to 28 mol% of n-butyl (meth)acrylate, 17 to 23 mol% of 2-ethylhexyl (meth)acrylate, 47 to 53 mol% of isobornyl (meth)acrylate, and 2 to 8 mol% of N-vinylpyrrolidone, based on a total of 100 mol% of the first monomer unit, the second monomer unit, and the third monomer unit.

In one embodiment of the present disclosure, the binder may include 22 to 28 mol% of n-butyl (meth)acrylate, 17 to 23 mol% of 2-ethylhexyl (meth)acrylate, 47 to 53 mol% of tert-butyl (meth)acrylate, and 2 to 8 mol% of methacrylic acid, based on a total of 100 mol% of the first monomer unit, the second monomer unit, and the third monomer unit.

In one embodiment of the present disclosure, the binder may have a degree of swelling of 20% to 95% when the binder is immersed in an electrolyte solution at 40°C to 80°C for 2 to 6 hours.

For example, the degree of swelling of the binder immersed in the electrolyte solution at 40°C to 80°C for 2 to 6 hours may be 32% to 93%, 33% to 92%, 20% to 33%, 33% to 35%, 35% to 38%, 38% to 40%, 40% to 42%, 42% to 45%, 45% to 47%, 47% to 55%, 55% to 62%, 62% to 89%, 89% to 95%, 32% to 34%, 34% to 36%, 37% to 39%, 39% to 41%, 41% to 43%, 44% to 46%, 46% to 48%, 54% to 56%, 61% to 63%, or 88% to 90%.

The degree of swelling may be measured as follows. First, the binder is uniformly applied onto a stainless steel spacer having a thickness of 1 t such that the polymer mass before drying is 0.03 g. The coated specimen is dried in a vacuum oven at 130°C for 4 hours to completely remove residual solvent, followed by cooling to room temperature, and the initial weight W₀ is measured. Subsequently, the specimen is fully immersed in the electrolyte solution, and maintained in an oven at 60°C for 4 hours to allow the binder to absorb the electrolyte solution. After completion of the immersion, the specimen is taken out, and the electrolyte solution on the surface is gently wiped off, after which the weight W₁ is immediately measured. At this time, the degree of swelling is calculated according to Equation 1 below: [Equation 1] $Degree of swelling \left(%\right) = \left({W}_{1}-{W}_{0}\right) / {W}_{0} \times 100$

In one embodiment of the present disclosure, the binder may be a cathode binder, an anode binder, or a separator binder.

For example, the binder of the present disclosure may be a cathode binder.

A slurry according to another aspect of the present disclosure may include the binder and an active material.

In one embodiment of the present disclosure, the slurry may be a cathode slurry including the cathode binder and a cathode active material.

In one embodiment of the present disclosure, the slurry may be an anode slurry including the anode binder and an anode active material.

In one embodiment of the present disclosure, the slurry may have a viscosity of 2,000 to 56,000 mPa·s.

For example, the slurry viscosity may be 2,050 to 55,500 mPa·s, 2,075 to 55,000 mPa·s, 2,000 to 2,087 mPa·s, 2,087 to 3,709 mPa·s, 3,709 to 4,233 mPa·s, 4,233 to 4,467 mPa·s, 4,467 to 5,527 mPa·s, 5,527 to 7,829 mPa·s, 7,829 to 8,185 mPa·s, 8,185 to 9,826 mPa·s, 9,826 to 10,175 mPa·s, 10,175 to 10,340 mPa·s, 10,340 to 10,520 mPa·s, 10,520 to 10,823 mPa·s, 10,823 to 11,954 mPa·s, 11,954 to 12,044 mPa·s, 12,044 to 12,549 mPa·s, 12,549 to 13,371 mPa·s, 13,371 to 18,242 mPa·s, 18,242 to 18,701 mPa·s, 18,701 to 34,172 mPa·s, 34,172 to 54,724 mPa·s, 2,001 to 2,186 mPa·s, 3,600 to 3,800 mPa·s, 4,100 to 4,350 mPa·s, 4,360 to 4,560 mPa·s, 5,400 to 5,650 mPa·s, 7,700 to 7,950 mPa·s, 8,050 to 8,300 mPa·s, 9,700 to 9,950 mPa·s, 10,050 to 10,300 mPa·s, 10,200 to 10,500 mPa·s, 10,400 to 10,700 mPa·s, 10,700 to 10,950 mPa·s, 11,800 to 12,100 mPa·s, 11,900 to 12,200 mPa·s, 12,400 to 12,700 mPa·s, 13,200 to 13,500 mPa·s, 18,100 to 18,400 mPa·s, 18,600 to 18,900 mPa·s, 34,000 to 34,400 mPa·s, or 54,500 to 55,800 mPa·s.

The viscosity of the slurry may be measured as follows.

The slurry is first maintained at 25°C, and the viscosity is measured using a rheometer (MCR 302e, Anton Paar). A parallel plate jig (diameter: 25 mm) with a gap of 1 mm is employed for the measurement. Data are collected while varying the shear rate stepwise over a range of 0.01 to 200 s⁻¹. From the resulting viscosity-shear rate curve, the viscosity at a shear rate of 1 s⁻¹ is selected as the representative value.

The cathode active material used for electrode formation in the present disclosure is not particularly limited, and any cathode active material known in the art may be employed. Specific examples of the cathode active material may include, but are not limited to: lithium metal; a lithium-cobalt-based oxide such as LiCoO₂; a lithium-manganese-based oxide such as Li₁₊ₓMn₂₋ₓO₄ (wherein, x=0 to 0.33), LiMnO₃, LiMn₂O₃, and LiMnO₂; a lithium-copper-based oxide such as Li₂CuO₂; a vanadium oxide such as LiV₃O₈, V₂O₅, and Cu₂V₂O₇; a lithium-nickel-based oxide expressed as LiNi₁₋ₓMₓO₂ (wherein, M=Co, Mn, Al, Cu, Fe, Mg, B, or Ga and x=0.01 to 0.3); a lithium manganese composite oxide expressed as LiMn₂₋ₓMₓO₂ (wherein, M=Co, Ni, Fe, Cr, Zn, or Ta, and x=0.01 to 0.1) or Li₂Mn₃MO₈ (wherein, M=Fe, Co, Ni, Cu, or Zn); a lithium-nickel-manganese-cobalt-based oxide expressed as Li(NiₐCo_{b}Mn_{c})O₂ (wherein, 0<a<1, 0<b<1, 0<c<1, a+b+c=1); a sulfur or disulfide compound; a phosphate such as LiFePO₄, LiMnPO₄, LiCoPO₄, and LiNiPO₄; and Fe₂(MoO₄)₃.

In one embodiment of the present disclosure, the cathode active material may be a lithium-nickel-manganese-cobalt-based oxide, a lithium-nickel-based oxide, a lithium-cobalt-based oxide, a phosphate, or a combination thereof.

In one embodiment of the present disclosure, the cathode active material may be lithium-nickel-cobalt-manganese oxide (NCM), lithium-nickel-cobalt-aluminum oxide (NCA), lithium-cobalt oxide (LCO), lithium iron phosphate (LFP), or a combination thereof.

In one embodiment of the present disclosure, the lithium-nickel-cobalt-manganese oxide (NCM) may be NCM 811 (Li(Ni_{0.8}Co_{0.1}Mn_{0.1})O₂).

In this case, the cathode active material layer may further include a dispersant, a conductive agent, a filler, and other additives in addition to the cathode active material.

The cathode active material may be included in an amount of 95 to 99 wt% in terms of solid content. When the amount of the active material is low, the battery may not provide high capacity. On the contrary, when the amount of the active material is excessively high, the relative amounts of the binder and conductive agent are reduced, which may lead to deterioration in electrode adhesiveness and electrical conductivity.

The conductive agent is not particularly limited and may be appropriately selected depending on the type of battery or capacitor. For example, in the case of a lithium-ion secondary battery, a carbon-based material such as graphite and activated carbon may be used, whereas in the case of a nickel-metal hydride secondary battery, cobalt oxide may be used, and for the anode, nickel powder, cobalt oxide, titanium oxide, or carbon may be used.

Examples of the carbon-based material may include acetylene black, furnace black, graphite, carbon fiber, fullerenes, and carbon nanotubes.

The conductive agent is typically used in an amount of 0.5 to 20 parts by weight, preferably 0.5 to 2 parts by weight, based on 100 parts by weight of the electrode active material.

Reducing the amount of the conductive agent while increasing the amount of the cathode active material may improve the energy density of a secondary battery. Accordingly, it is important to maximize the amount of the active material while ensuring sufficient electrical conductivity with a minimal amount of the conductive agent in order to enhance energy density.

In an electrode slurry for secondary batteries, the conductive agent exhibits higher conductivity efficiency as it is finely and uniformly dispersed, thereby reducing battery internal resistance and improving output performance as well as cycle life characteristics. Whereas, when the conductive agent is coarsely and non-uniformly dispersed, adhesiveness and conductivity may be reduced even with the same amount, which adversely affects the cycle life and output characteristics of the battery. Additionally, when the viscosity of a dispersion is low, the solid content of the slurry may be increased, thereby improving the electrode production speed.

As a cathode binder for secondary batteries, in addition to the cathode binder of the present disclosure, any one selected from the group consisting of poly(meth)acrylic acid, poly(meth)acrylamide, carboxymethyl cellulose, polyvinylidene fluoride, a polyhexafluoropropylene-polyvinylidene fluoride copolymer (P(VdF/HFP)), poly(vinyl acetate), polyvinyl alcohol, polyethylene oxide, polyvinylpyrrolidone, alkylated polyethylene oxide, polyvinyl ether, poly(methyl methacrylate), poly(ethyl acrylate), polytetrafluoroethylene, polyvinyl chloride, polyacrylonitrile, polyvinylpyridine, styrene-butadiene rubber, acrylonitrile-butadiene rubber, and copolymers thereof, or a mixture of two or more thereof may be used.

The amount of the binder in a cathode slurry composition is preferably 0.3 to 10 wt% in terms of solid content, and more preferably 0.7 to 3 wt%. When the amount is less than 0.3 wt%, it is difficult to achieve sufficient adhesiveness within the current collector and the electrode composition. On the other hand, when the amount exceeds 10 wt%, the proportion of the binder in the electrode slurry composition increases, which may reduce battery capacity and increase internal resistance.

An electrode according to another aspect of the present disclosure may include: a current collector; and an active material layer formed on the current collector and including the binder of the present disclosure.

In one embodiment of the present disclosure, the electrode may be a cathode, and the cathode may include: a current collector; and a cathode active material layer formed on the current collector and including the cathode binder of the present disclosure.

In one embodiment of the present disclosure, the electrode may be an anode, and the anode may include: a current collector; and an anode active material layer formed on the current collector and including the anode binder of the present disclosure.

In one embodiment of the present disclosure, the cathode may have an adhesiveness of 50 to 650 gf/25 mm.

For example, the adhesiveness of the cathode may be 110 to 640 gf/25 mm, 115 to 630 gf/25 mm, 100 to 117.16 gf/25 mm, 117.16 to 125.92 gf/25 mm, 125.92 to 142.60 gf/25 mm, 142.60 to 153.14 gf/25 mm, 153.14 to 166.83 gf/25 mm, 166.83 to 211.35 gf/25 mm, 211.35 to 249.04 gf/25 mm, 249.04 to 287.52 gf/25 mm, 287.52 to 320.98 gf/25 mm, 320.98 to 447.39 gf/25 mm, 447.39 to 459.04 gf/25 mm, 459.04 to 472.78 gf/25 mm, 472.78 to 499.59 gf/25 mm, 499.59 to 501.07 gf/25 mm, 501.07 to 520.22 gf/25 mm, 520.22 to 523.91 gf/25 mm, 523.91 to 527.03 gf/25 mm, 527.03 to 540.75 gf/25 mm, 540.75 to 557.24 gf/25 mm, 557.24 to 621.50 gf/25 mm, or 621.50 to 650 gf/25 mm.

For example, the adhesiveness of the cathode may be 110 to 120 gf/25 mm, 120 to 130 gf/25 mm, 135 to 150 gf/25 mm, 145 to 160 gf/25 mm, 160 to 175 gf/25 mm, 205 to 220 gf/25 mm, 240 to 260 gf/25 mm, 280 to 295 gf/25 mm, 310 to 330 gf/25 mm, 440 to 455 gf/25 mm, 450 to 470 gf/25 mm, 465 to 480 gf/25 mm, 490 to 510 gf/25 mm, 495 to 505 gf/25 mm, 510 to 530 gf/25 mm, 515 to 535 gf/25 mm, 520 to 540 gf/25 mm, 550 to 565 gf/25 mm, 610 to 630 gf/25 mm, or 640 to 650 gf/25 mm.

The adhesiveness of the cathode may be measured as follows.

The cathode is cut into a size of 15 cm × 2.5 cm. The coating surface of the cut cathode is adhered to an acrylic plate to which a double-sided adhesive tape is attached, followed by pressing four times with a pressing rubber roller to prepare a peel-off test specimen. The prepared specimen is loaded into a universal testing machine (UTM) for measuring adhesion strength. Subsequently, a 2.5 cm length from one end of the cathode is peeled at a 180° angle, and the corresponding peel force is measured. At least five specimens are tested for each cathode, and the average peel stress is calculated from the measured values.

The cathode may be manufactured through the steps of (a) preparing a composition for forming a cathode active material layer including a cathode active material and the binder of the present disclosure, and (b) applying the composition for forming the cathode active material layer onto a cathode current collector, followed by drying.

The composition for forming the cathode active material layer may be stirred by a conventional method using a conventional mixer, such as a high-shear mixer or a homo mixer.

Step (b) is a step of applying the composition for forming the cathode active material layer prepared in step (a) onto the cathode current collector and then drying the composition, thereby manufacturing a cathode for a lithium secondary battery.

The method for applying the slurry-type composition for forming the cathode active material layer is not particularly limited. Examples thereof may include doctor blade coating, dip coating, gravure coating, slit die coating, spin coating, comma coating, bar coating, reverse roll coating, screen coating, and cap coating.

After coating and drying, a cathode for a secondary battery (particularly, a lithium secondary battery), in which a cathode active material layer is formed, may be ultimately manufactured.

The current collector may be any electrically conductive material that does not chemically react with the slurry for electrode formation. Representative examples thereof may include aluminum foil and copper foil. A current collector having a thickness of 3 to 50 µm may be selected and used.

A secondary battery according to another aspect of the present disclosure may include the electrode.

In one embodiment of the present disclosure, the secondary battery may include the cathode.

In one embodiment of the present disclosure, the secondary battery may include the anode.

Meanwhile, a secondary battery may be manufactured including a cathode including the cathode binder of the present disclosure, an anode, a separator, and an electrolyte solution.

In one embodiment of the present disclosure, the secondary battery may have an initial coulombic efficiency of 88% to 91%.

For example, the initial coulombic efficiency of the secondary battery may be 88.4% to 91%, 88.8% to 91%, 88% to 88.83%, 88.83% to 88.98%, 88.98% to 89.05%, 89.05% to 89.27%, 89.27% to 89.64%, 89.64% to 89.82%, 89.82% to 90.12%, 90.12% to 90.14%, 90.14% to 90.27%, 90.27% to 90.31%, 90.31% to 90.33%, 90.33% to 90.42%, 90.42% to 90.47%, 90.47% to 90.53%, 90.53% to 90.59%, 90.59% to 90.66%, 90.66% to 90.74%, 90.74% to 90.98%, 88.80% to 88.86%, 88.95% to 89.01%, 89.00% to 89.08%, 89.02% to 89.07%, 89.22% to 89.32%, 89.60% to 89.68%, 89.78% to 89.86%, 90.08% to 90.16%, 90.10% to 90.18%, 90.23% to 90.31%, 90.27% to 90.35%, 90.29% to 90.37%, 90.38% to 90.46%, 90.43% to 90.51%, 90.49% to 90.57%, 90.55% to 90.63%, 90.62% to 90.70%, 90.70% to 90.78%, 90.71% to 90.77%, or 90.94% to 91%.

The initial coulombic efficiency of the secondary battery may be measured as follows.

The secondary battery is charged and discharged at 25°C under a constant current/constant voltage (CC/CV) mode. The voltage ranges are set depending on the type of active material: 2.8 to 4.2 V for NCM, 2.8 to 4.25 V for NCA, 2.75 to 4.5 V for LCO, and 2.5 to 3.65 V for LFP. Within each voltage range, the battery is first charged at 0.1 C and then discharged to the lower cut-off voltage at 0.1 C. Subsequently, the battery is sequentially charged and discharged at 0.2 C and 0.5 C under the same voltage range to complete the formation process. After the formation process, the battery is charged again at 0.1 C, and the obtained capacity is defined as the "initial charge capacity". The battery is then discharged at 0.1 C within the same voltage range, and the obtained capacity is defined as the "initial discharge capacity". At this time, the initial coulombic efficiency is calculated according to Equation 2 below: [Equation 2] 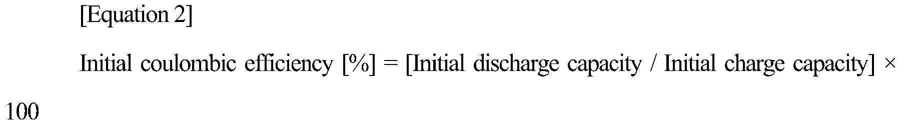 Initial coulombic efficiency [%] = [Initial discharge capacity / Initial charge capacity] × 100

For example, the secondary battery may have a capacity retention (100 cycles) of 86% to 95%.

For example, the capacity retention of the secondary battery may be 86.3% to 94.5%, 86.4% to 94.4%, 86% to 86.44%, 86.44% to 86.58%, 86.58% to 86.84%, 86.84% to 89.06%, 89.06% to 90.31%, 90.31% to 90.44%, 90.44% to 90.69%, 90.69% to 90.91%, 90.91% to 90.94%, 90.94% to 91.30%, 91.30% to 91.46%, 91.46% to 91.49%, 91.49% to 92.04%, 92.04% to 93.58%, 93.58% to 93.72%, 93.72% to 93.87%, 93.87% to 94.03%, 94.03% to 94.27%, 94.27% to 94.39%, or 94.39% to 95%.

For example, the capacity retention of the secondary battery may be 86.40% to 86.50%, 86.54% to 86.62%, 86.80% to 86.90%, 88.90% to 89.20%, 90.20% to 90.40%, 90.40% to 90.50%, 90.60% to 90.75%, 90.85% to 90.97%, 90.96% to 91.02%, 91.25% to 91.35%, 91.40% to 91.52%, 91.47% to 91.52%, 92.00% to 92.08%, 93.50% to 93.65%, 93.65% to 93.78%, 93.80% to 93.93%, 93.95% to 94.10%, 94.20% to 94.35%, 94.35% to 94.50%, or 94.90% to 95.00%.

The capacity retention may be measured as follows.

First, a cell is placed in a chamber maintained at 25°C, and charge-discharge cycling is performed under a constant current/constant voltage (CC/CV) mode. The voltage ranges are set depending on the type of electrode material: 2.8 to 4.2 V for NCM electrode, 2.8 to 4.25 V for NCA electrode, 2.75 to 4.5 V for LCO electrode, and 2.5 to 3.65 V for LFP electrode. Within each voltage range, the cell is sequentially charged once at 0.1 C, 0.2 C, and 0.5 C, followed by discharging to the lower cut-off voltage under the same range to complete the initial formation process. Subsequently, the current is set to 1 C, and charge-discharge cycling is conducted within the same voltage range. Specifically, the cell is charged to the upper cut-off voltage (with a CV termination current of 0.005 C) and then discharged to the lower cut-off voltage. This process is defined as one cycle and is repeated for a total of 100 cycles. At this time, the capacity retention is calculated as the ratio of the discharge capacity at the 100th cycle to that at the 1st cycle, according to Equation 3 below: [Equation 3] 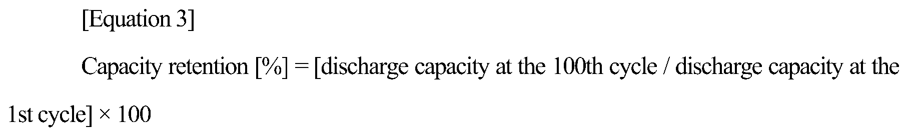 Capacity retention [%] = [discharge capacity at the 100th cycle / discharge capacity at the 1st cycle] × 100

The separator needs to be an insulator that can separate the anode and the cathode and provide a passage through which only lithium ions can migrate. To this end, the separator requires good wettability to an electrolyte, and may be made of a porous polymer film such as PE/PP or a porous non-woven fabric. To prevent a battery short-circuit, a coated separator having enhanced heat resistance and mechanical strength, such as a ceramic-coated separator, may be used. The coating may be applied in a single layer or multiple layers.

The separator may be composed of a porous substrate. As the porous substrate, any porous substrate commonly used in electrochemical devices may be used. For example, a polyolefin-based porous membrane or a non-woven fabric may be used, but is not particularly limited thereto.

The separator may be a porous substrate made of any one selected from the group consisting of polyethylene, polypropylene, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate, or a mixture of two or more thereof.

The electrolyte solution of the secondary battery is a non-aqueous electrolyte containing a lithium salt, and is composed of a lithium salt and a solvent. As the solvent, a non-aqueous organic solvent, an organic solid electrolyte, or an inorganic solid electrolyte may be used.

The lithium salt is a substance that is likely to be dissolved in the non-aqueous electrolyte solution, and examples thereof may include LiCl, LiBr, LiI, LiClO₄, LiBF₄, LiB₁₀Cl₁₀, LiPF₆, LiAsF₆, LiSbF₆, LiAlCl₄, LiSCN, LiC₄BO₈, LiCF₃CO₂, LiCH₃SO₃, LiCF₃SO₃, LiN(SO₂CF₃)₂, LiN(SO₂F)₂, LiN(SO₂C₂F₅)₂, LiC₄F₉SO₃, LiC(CF₃SO₂)₃, (CF₃SO₂)·₂NLi, lithium chloroborane, lower aliphatic lithium carbonate, lithium tetraphenylborate, and imide.

The non-aqueous organic solvent may be a non-aprotic organic solvent, and examples thereof may include, N-methyl-2-pyrrolidone, propylene carbonate, ethylene carbonate, butylene carbonate, dimethyl carbonate, diethyl carbonate, ethylmethyl carbonate, gamma-butyrolactone, 1,2-dimethoxy ethane, 1,2-diethoxy ethane, tetrahydroxy franc, 2-methyltetrahydrofuran, dimethyl sulfoxide, 1,3-dioxolane, 4-methyl-1,3-dioxene, diethyl ether, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Examples of the organic solid electrolyte may include polyethylene derivatives, polyethylene oxide derivatives, polypropylene oxide derivatives, phosphoric acid ester polymers, poly agitation lysine, polyester sulfides, polyvinyl alcohols, polyvinylidene fluorides, and polymers having secondary dissociation groups.

Examples of the inorganic solid electrolyte may include nitrides, halides, and sulfates of lithium such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

Additionally, the non-aqueous electrolyte solution may further include other additives for the purpose of improving charge/discharge characteristics, flame retardancy, and the like. Examples of the additives may include pyridine, triethylphosphite, triethanolamine, cyclic ether, ethylenediamine, n-glyme, hexaphosphate triamide, nitrobenzene derivatives, sulfur, quinone imine dye, N-substituted oxazolidinone, N,N-substituted imidazolidine, ethylene glycol dialkyl ether, ammonium salts, pyrrole, 2-methoxyethanol, aluminum trichloride, fluoroethylene carbonate (FEC), propene sultone (PRS), and vinylene carbonate (VC).

The lithium secondary battery according to the present disclosure may be subjected to not only a conventional winding process but also lamination (stack) and folding processes of the separator and the electrode. Additionally, a casing of the battery may be cylindrical, rectangular, pouch-shaped, or coin-shaped.

In one embodiment of the present disclosure, the secondary battery may be used not only as a battery cell serving as a power source for small-sized devices, but also as a unit cell in a medium- to large-sized battery module including a plurality of battery cells used as a power source for medium- to large-sized devices.

Representative examples of such medium- to large-sized devices may include, but are not limited to, power tools driven by electric motors; electric vehicles including electric vehicles (EVs), hybrid electric vehicles (HEVs), and plug-in hybrid electric vehicles (PHEVs); electric two-wheeled vehicles including electric bicycles (e-bikes) and electric scooters (e-scooters); and electric golf carts.

Hereinafter, the present disclosure will be described in more detail by way of examples. However, the following examples are provided for illustrative purposes only to aid understanding of the present disclosure, and the scope of the present disclosure is not limited thereto.

### Examples and Comparative Examples: Preparation of Copolymer Particles

### [Example 1]

A five-neck flask sufficiently purged with nitrogen was charged with 295 g of deionized water, 0.9 g of DOWFAX, and 0.15 g of ethylenediaminetetraacetic acid (EDTA). The mixture was heated to 70°C and maintained at 70°C for 15 minutes to stabilize the temperature. Thereafter, nitrogen gas was continuously introduced for at least 1 hour to sufficiently replace the internal atmosphere with nitrogen. Subsequently, 100 g of a monomer mixture composed of 65 mol% n-butyl acrylate, 20 mol% 2-ethylhexyl acrylate, 10 mol% isobornyl acrylate, and 5 mol% methacrylic acid, and an initiator solution prepared by dissolving 0.05 g of potassium persulfate (KPS) in 5 g of water were simultaneously added dropwise over 30 minutes. After completion of the addition, the reaction was further continued at the same temperature of 70°C for 6 hours to form a copolymer latex. After the reaction, the obtained latex was then vacuum-dried at 90°C to completely remove moisture. The dried polymer was then dissolved in N-methyl-2-pyrrolidone at 60°C to prepare a binder solution.

### [Example 2]

A copolymer was prepared in the same manner as in Example 1, except that the composition of the 100 g monomer mixture was adjusted to 45 mol% n-butyl acrylate, 20 mol% 2-ethylhexyl acrylate, 30 mol% isobornyl acrylate, and 5 mol% methacrylic acid.

### [Example 3]

A copolymer was prepared in the same manner as in Example 1, except that the composition of the 100 g monomer mixture was adjusted to 25 mol% n-butyl acrylate, 20 mol% 2-ethylhexyl acrylate, 50 mol% isobornyl acrylate, and 5 mol% methacrylic acid.

### [Example 4]

A copolymer was prepared in the same manner as in Example 1, except that the composition of the 100 g monomer mixture was adjusted to 25 mol% ethyl acrylate, 20 mol% 2-ethylhexyl acrylate, 50 mol% isobornyl acrylate, and 5 mol% methacrylic acid.

### [Example 5]

A copolymer was prepared in the same manner as in Example 1, except that the composition of the 100 g monomer mixture was adjusted to 25 mol% n-lauryl acrylate, 20 mol% 2-ethylhexyl acrylate, 50 mol% isobornyl acrylate, and 5 mol% methacrylic acid.

### [Example 6]

A copolymer was prepared in the same manner as in Example 1, except that the composition of the 100 g monomer mixture was adjusted to 25 mol% vinyl acetate, 20 mol% 2-ethylhexyl acrylate, 50 mol% isobornyl acrylate, and 5 mol% methacrylic acid.

### [Example 7]

A copolymer was prepared in the same manner as in Example 1, except that the composition of the 100 g monomer mixture was adjusted to 25 mol% n-butyl acrylate, 20 mol% 2-ethylhexyl acrylate, 50 mol% styrene, and 5 mol% methacrylic acid.

### [Example 8]

A copolymer was prepared in the same manner as in Example 1, except that the composition of the 100 g monomer mixture was adjusted to 25 mol% n-butyl acrylate, 20 mol% 2-ethylhexyl acrylate, and 55 mol% isobornyl acrylate.

### [Example 9]

A copolymer was prepared in the same manner as in Example 1, except that the composition of the 100 g monomer mixture was adjusted to 25 mol% n-butyl acrylate, 20 mol% 2-ethylhexyl acrylate, 45 mol% isobornyl acrylate, and 10 mol% methacrylic acid.

### [Example 10]

A copolymer was prepared in the same manner as in Example 1, except that the composition of the 100 g monomer mixture was adjusted to 25 mol% n-butyl acrylate, 20 mol% 2-ethylhexyl acrylate, 50 mol% isobornyl acrylate, and 5 mol% N-vinylpyrrolidone.

### [Example 11]

A copolymer was prepared in the same manner as in Example 1, except that the composition of the 100 g monomer mixture was adjusted to 25 mol% n-butyl acrylate, 20 mol% 2-ethylhexyl acrylate, 50 mol% tert-butyl acrylate, and 5 mol% methacrylic acid.

### [Comparative Example 1]

A copolymer was prepared in the same manner as in Example 1, except that the composition of the 100 g monomer mixture was adjusted to 5 mol% n-butyl acrylate, 20 mol% 2-ethylhexyl acrylate, 70 mol% isobornyl acrylate, and 5 mol% methacrylic acid.

### [Comparative Example 2]

A copolymer was prepared in the same manner as in Example 1, except that the composition of the 100 g monomer mixture was adjusted to 90 mol% n-butyl acrylate, 5 mol% 2-ethylhexyl acrylate, and 5 mol% methacrylic acid.

### [Comparative Example 3]

A copolymer was prepared in the same manner as in Example 1, except that the composition of the 100 g monomer mixture was adjusted to 25 mol% n-butyl acrylate, 20 mol% 2-ethylhexyl acrylate, 35 mol% isobornyl acrylate, and 20 mol% methacrylic acid.

### [Comparative Example 4]

A copolymer was prepared in the same manner as in Example 1, except that the composition of the 100 g monomer mixture was adjusted to 25 mol% n-butyl acrylate, 20 mol% 2-ethylhexyl acrylate, 35 mol% isobornyl acrylate, and 20 mol% N-vinylpyrrolidone.

### [Comparative Example 5]

In Comparative Example 5, a fluorine-based PVDF binder (Solef 5130, Solvay) was used instead of the copolymer.

The compositions of the monomer mixtures used for preparing the copolymers in Examples 1 to 11 and Comparative Examples 1 to 5 are summarized in Table 1 below.

**Table 1**

| | First monomer unit (mol%) | | | | Second monomer unit (mol%) | | | | Third monomer unit (mol%) | |
|---|---|---|---|---|---|---|---|---|---|---|
| | EA | BA | LA | VAc | 2-EHA | IBOA | tert-BA | SM | MAA | VP |
| Example 1 | | 65 | | | 20 | 10 | | | 5 | |
| Example 2 | | 45 | | | 20 | 30 | | | 5 | |
| Example 3 | | 25 | | | 20 | 50 | | | 5 | |
| Example 4 | 25 | | | | 20 | 50 | | | 5 | |
| Example 5 | | | 25 | | 20 | 50 | | | 5 | |
| Example 6 | | | | 25 | 20 | 50 | | | 5 | |
| Example 7 | | 25 | | | 20 | | 50 | | 5 | |
| Example 8 | | 25 | | | 20 | 55 | | | | |
| Example 9 | | 25 | | | 20 | 45 | | | 10 | |
| Example 10 | | 25 | | | 20 | 50 | | | | 5 |
| Example 11 | | 25 | | | 20 | | | 50 | 5 | |
| Comparative Example 1 | | 5 | | | 20 | 70 | | | 5 | |
| Comparative Example 2 | | 90 | | | 5 | | | | 5 | |
| Comparative Example 3 | | 25 | | | 20 | 35 | | | 20 | |
| Comparative Example 4 | | 25 | | | 20 | 35 | | | | 20 |
| Comparative Example 5 | | PVDF | | | | | | | | |

In Table 1 above, "EA" denotes ethyl acrylate, "BA" denotes n-butyl acrylate, "LA" denotes n-lauryl acrylate, "VAc" denotes vinyl acetate, "2-EHA" denotes 2-ethylhexyl acrylate, "IBOA" denotes isobornyl acrylate, "tert-BA" denotes tert-butyl acrylate, "SM" denotes styrene, "MAA" denotes methacrylic acid, and "VP" denotes N-vinylpyrrolidone.

### Preparation of Slurry

### [Preparation Example 1]

First, based on the solid content, 97.72 parts by weight of an NCM811 active material, 0.78 parts by weight of a multi-walled carbon nanotube (MWCNT) dispersion, and 1.5 parts by weight of the copolymer binder synthesized in Example 1 were weighed to give a total of 100 parts by weight. Subsequently, N-methyl-2-pyrrolidone (NMP) was added to dilute the mixture so that the solid content of the slurry became 65 wt%. The mixture was then introduced into a homo mixer and stirred at 3,000 rpm for 30 minutes to uniformly disperse the components, thereby preparing an NCM cathode slurry.

### [Preparation Examples 2 to 11, and Comparative Preparation Examples 1 to 5]

Slurries were prepared in the same manner as Preparation Example 1, except that the copolymer binders synthesized in Examples 2 to 11 were respectively used in Preparation Examples 2 to 11, and the copolymers of Comparative Examples 1 to 4 or the PVDF binder of Comparative Example 5 were respectively used in Comparative Preparation Examples 1 to 5.

### [Preparation Example 12]

First, based on the solid content, 96 parts by weight of an LFP active material, 1.2 parts by weight of an MWCNT dispersion, and 2.8 parts by weight of the copolymer binder synthesized in Example 3 were weighed to give a total of 100 parts by weight. Subsequently, NMP was added to dilute the mixture so that the solid content of the slurry became 55 wt%. The mixture was then introduced into a homo mixer and stirred at 3,000 rpm for 30 minutes to uniformly disperse the components, thereby preparing an LFP cathode slurry.

### [Preparation Examples 13 and 14, and Comparative Preparation Example 6]

Slurries were prepared in the same manner as Preparation Example 12, except that the copolymer binders synthesized in Examples 8 and 9 were respectively used in Preparation Examples 13 and 14, and the PVDF binder of Comparative Example 5 was used in Comparative Preparation Example 6.

### [Preparation Example 15]

First, based on the solid content, 97.8 parts by weight of an NCA active material, 1.2 parts by weight of an MWCNT dispersion, and 1.0 part by weight of the copolymer binder synthesized in Example 3 were weighed to give a total of 100 parts by weight. Subsequently, NMP was added to dilute the mixture so that the solid content of the slurry became 75 wt%. The mixture was then introduced into a homo mixer and stirred at 3,000 rpm for 30 minutes to uniformly disperse the components, thereby preparing an NCA cathode slurry.

### [Preparation Examples 16 and 17, and Comparative Preparation Example 7]

Slurries were prepared in the same manner as Preparation Example 15, except that the copolymer binders synthesized in Examples 8 and 9 were respectively used in Preparation Examples 16 and 17, and the PVDF binder of Comparative Example 5 was used in Comparative Preparation Example 7.

### [Preparation Example 18]

First, based on the solid content, 98 parts by weight of an LCO active material, 1.2 parts by weight of an MWCNT dispersion, and 0.8 parts by weight of the copolymer binder synthesized in Example 3 were weighed to give a total of 100 parts by weight. Subsequently, NMP was added to dilute the mixture so that the solid content of the slurry became 75 wt%. The mixture was then introduced into a homo mixer and stirred at 3,000 rpm for 30 minutes to uniformly disperse the components, thereby preparing an LCO cathode slurry.

### [Preparation Examples 19 and 20, and Comparative Preparation Example 8]

Slurries were prepared in the same manner as Preparation Example 18, except that the copolymer binders synthesized in Examples 8 and 9 were respectively used in Preparation Examples 19 and 20, and the PVDF binder of Comparative Example 5 was used in Comparative Preparation Example 8.

The types of active materials and binders used in the slurries of Preparation Examples 1 to 20 and Comparative Preparation Examples 1 to 8 are summarized in Table 2 below.

In Table 2 below, NCM (lithium-nickel-cobalt-manganese oxide) denotes NCM 811 (Li(Ni_{0.8}Co_{0.1}Mn_{0.1}), LFP denotes lithium iron phosphate, NCA denotes lithium-nickel-cobalt-aluminum oxide, and LCO denotes lithium-cobalt oxide.

**Table 2**

| Slurry | Active material | Binder |
|---|---|---|
| Preparation Example 1 | NCM | Example 1 |
| Preparation Example 2 | NCM | Example 2 |
| Preparation Example 3 | NCM | Example 3 |
| Preparation Example 4 | NCM | Example 4 |
| Preparation Example 5 | NCM | Example 5 |
| Preparation Example 6 | NCM | Example 6 |
| Preparation Example 7 | NCM | Example 7 |
| Preparation Example 8 | NCM | Example 8 |
| Preparation Example 9 | NCM | Example 9 |
| Preparation Example 10 | NCM | Example 10 |
| Preparation Example 11 | NCM | Example 11 |
| Preparation Example 12 | LFP | Example 3 |
| Preparation Example 13 | LFP | Example 8 |
| Preparation Example 14 | LFP | Example 9 |
| Preparation Example 15 | NCA | Example 3 |
| Preparation Example 16 | NCA | Example 8 |
| Preparation Example 17 | NCA | Example 9 |
| Preparation Example 18 | LCO | Example 3 |
| Preparation Example 19 | LCO | Example 8 |
| Preparation Example 20 | LCO | Example 9 |
| Comparative Preparation Example 1 | NCM | Comparative Example 1 |
| Comparative Preparation Example 2 | NCM | Comparative Example 2 |
| Comparative Preparation Example 3 | NCM | Comparative Example 3 |
| Comparative Preparation Example 4 | NCM | Comparative Example 4 |
| Comparative Preparation Example 5 | NCM | Comparative Example 5 |
| Comparative Preparation Example 6 | LFP | Comparative Example 5 |
| Comparative Preparation Example 7 | NCA | Comparative Example 5 |
| Comparative Preparation Example 8 | LCO | Comparative Example 5 |

### Preparation of Cathode

The slurry compositions of Preparation Examples 1 to 20 and Comparative Preparation Examples 1 to 8 were each uniformly applied onto an aluminum foil (cathode current collector) having a thickness of 20 µm using a doctor blade. The coated electrode was then dried in an oven at 130°C for 1 hour to completely remove residual solvent. Thereafter, the dried electrode was roll-pressed to prepare a cathode.

### Preparation of Cell (Secondary Battery)

As an electrolyte, a non-aqueous electrolyte solution was used. The non-aqueous electrolyte solution was prepared by adding 1 part by weight each of fluoroethylene carbonate (FEC), PS, and LiPOF₂ to 100 parts by weight of a solvent in which ethylene carbonate (EC) and ethyl methyl carbonate (EMC) were mixed at a volume ratio of 25:75, followed by dissolving lithium hexafluorophosphate (LiPF₆) at a concentration of 1 mol/L. A lithium secondary battery was assembled by interposing a polyolefin separator between the cathode prepared as described above and a commercially available graphite anode, and then accommodating the electrode stack into a 2032 coin cell or a pouch-type casing, followed by sealing.

### [Evaluation Example 1] Measurement of Degree of Swelling in Electrolyte Solution

First, the binders of the Examples and Comparative Examples were each applied onto a stainless steel spacer having a thickness of 1 t, and the coating amount was adjusted such that the polymer mass before drying was 0.03 g. The prepared specimen was dried in a vacuum oven at 130°C for 4 hours to completely remove residual solvent, cooled to room temperature, and then the initial weight W₀ was measured.

Subsequently, the specimen was fully immersed in an electrolyte solution, and maintained in an oven at 60°C for 4 hours to allow the binder sufficiently absorb the electrolyte solution. The electrolyte solution was prepared by adding 1 part by weight each of fluoroethylene carbonate (FEC), PS, and LiPOF₂ to 100 parts by weight of a solvent in which ethylene carbonate (EC) and ethyl methyl carbonate (EMC) were mixed at a volume ratio of 25:75, followed by dissolving lithium hexafluorophosphate (LiPF₆) at a concentration of 1 mol/L. After completion of the immersion, the specimen was taken out, and the electrolyte solution on the surface was gently wiped off, after which the weight W₁ was immediately measured.

At this time, the degree of swelling was calculated according to Equation 1 below: [Equation 1] $Degree of swelling \left(%\right) = \left({W}_{1}-{W}_{0}\right) / {W}_{0} \times 100$

The degrees of swelling in electrolyte solution of the Examples and Comparative Examples are summarized in Table 3 below.

**Table 3**

| | Degree of swelling in electrolyte solution (%) |
|---|---|
| Example 1 | 89 |
| Example 2 | 55 |
| Example 3 | 42 |
| Example 4 | 45 |
| Example 5 | 33 |
| Example 6 | 51 |
| Example 7 | 38 |
| Example 8 | 35 |
| Example 9 | 47 |
| Example 10 | 62 |
| Example 11 | 40 |
| Comparative Example 1 | 21 |
| Comparative Example 2 | 208 |
| Comparative Example 3 | 127 |
| Comparative Example 4 | 142 |
| Comparative Example 5 | 24 |

As shown in Table 3 above, Examples 1 to 11 exhibit a degree of swelling in electrolyte solution uniformly distributed within a range of 33% to 89%. This is believed to arise from the balanced incorporation of the first monomer unit and the second monomer unit within a range of 20 to 80 mol%, along with the introduction of bulky side chains in the second monomer unit, which effectively regulates electrolyte uptake.

On the contrary, Comparative Example 2, in which the content of the second monomer unit is insufficient, exhibits excessive swelling of 208%, indicating a high risk of electrode expansion, active material detachment, and microcrack formation. Meanwhile, Comparative Example 1, having a low content of the first monomer unit, and Comparative Example 5, employing a fluorine-based PVDF binder (Solef 5130), show insufficient swelling in the range of 21% to 24%, suggesting inadequate electrolyte penetration, which may lead to increased internal resistance and hindered lithium-ion transport. Furthermore, comparison among Example 3, Examples 1 and 2, and Comparative Examples 3 and 4 clearly indicates that the degree of swelling in electrolyte solution increases with increasing content of the first monomer unit or the third monomer unit, whereas it decreases with increasing content of the second monomer unit.

Accordingly, these results revealed that an appropriate degree of swelling is achieved when the contents of the first, second, and third monomer units satisfy the ranges defined herein.

### [Evaluation Example 2] Measurement of Slurry Viscosity

The slurries of Preparation Examples 1 to 20 and Comparative Preparation Examples 1 to 8 were each maintained at 25°C, and the viscosity was measured using a rheometer (Anton Paar). A parallel plate jig (diameter: 25 mm) with a gap of 1 mm was employed for the measurement. Data were collected while varying the shear rate stepwise over a range of 0.01 to 200 s⁻¹. From the resulting viscosity-shear rate curve, the viscosity at a shear rate of 1 s⁻¹ was selected as the representative value. The results are presented in Table 4 below.

### [Evaluation Example 3] Measurement of Cathode Adhesiveness

The cathodes of Preparation Examples 1 to 20 and Comparative Preparation Examples 1 to 8 were each cut into a size of 15 cm × 2.5 cm. The coating surface of the cut cathode was adhered to an acrylic plate to which a double-sided adhesive tape was attached, followed by pressing four times with a pressing rubber roller to prepare a peel-off test specimen. The prepared specimen was loaded into a universal testing machine (UTM) for measuring adhesion strength. Subsequently, a 2.5 cm length from one end of the cathode was peeled at a 180° angle, and the corresponding peel force was measured. At least five specimens were tested for each Preparation and Comparative Preparation Example, and the average peel stress was calculated from the measured values.

### [Evaluation Example 4] Measurement of Initial Coulombic Efficiency

The cells of Preparation Examples 1 to 20 and Comparative Preparation Examples 1 to 8 were each charged and discharged at 25°C under a constant current/constant voltage (CC/CV) mode. The voltage ranges were set depending on the type of active material: 2.8 to 4.2 V for NCM, 2.8 to 4.25 V for NCA, 2.75 to 4.5 V for LCO, and 2.5 to 3.65 V for LFP. Within each voltage range, the cell was first charged at 0.1 C and then discharged to the lower cut-off voltage at 0.1 C. Subsequently, the cell was sequentially charged and discharged at 0.2 C and 0.5 C under the same voltage range to complete the formation process. After the formation process, the cell was charged again at 0.1 C, and the obtained capacity was defined as the "initial charge capacity". The cell was then discharged at 0.1 C within the same voltage range, and the obtained capacity was defined as the "initial discharge capacity". At this time, the initial coulombic efficiency was calculated according to Equation 2 below: [Equation 2] 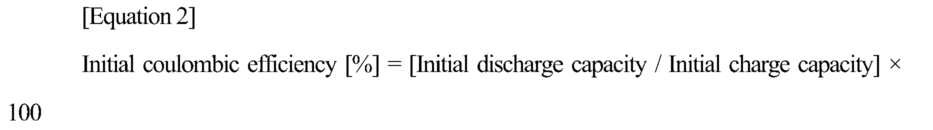 Initial coulombic efficiency [%] = [Initial discharge capacity / Initial charge capacity] × 100

The measured values of the initial coulombic efficiency are presented in Table 4 below.

### [Evaluation Example 5] Measurement of Capacity Retention (100 Cycles)

The cells of Preparation Examples 1 to 20 and Comparative Preparation Examples 1 to 8 were each placed in a chamber maintained at 25°C, and charge-discharge cycling was performed under a constant current/constant voltage (CC/CV) mode. The voltage ranges were set depending on the type of electrode material: 2.8 to 4.2 V for NCM electrode, 2.8 V to 4.25 V for NCA electrode, 2.75 V to 4.5 V for LCO electrode, and 2.5 V to 3.65 V for LFP electrode. Within each voltage range, the cell was sequentially charged once at 0.1 C, 0.2 C, and 0.5 C, followed by discharging to the lower cut-off voltage under the same range to complete the initial formation process. Subsequently, the current was set to 1 C, and charge-discharge cycling was conducted within the same voltage range. Specifically, the cell was charged to the upper cut-off voltage (with a CV termination current of 0.005 C) and then discharged to the lower cut-off voltage. This process was defined as one cycle and was repeated for a total of 100 cycles. At this time, the capacity retention was calculated as the ratio of the discharge capacity at the 100th cycle to that at the 1st cycle, according to Equation 3 below: [Equation 3] 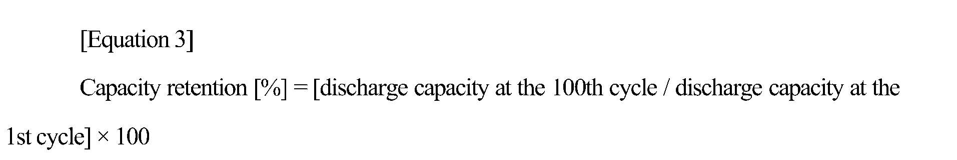 Capacity retention [%] = [discharge capacity at the 100th cycle / discharge capacity at the 1st cycle] × 100

The results of the capacity retention measurements are presented in Table 4 below.

**Table 4**

| | Slurry viscosity (viscosity (cp) @ 1 s⁻¹) | Adhesiveness (gf/25 mm) | Initial coulombic efficiency (%) | Capacity retention (%, 100 cycles) |
|---|---|---|---|---|
| Preparation Example 1 | 13371 | 557.24 | 89.27 | 89.06 |
| Preparation Example 2 | 11954 | 540.75 | 89.64 | 90.91 |
| Preparation Example 3 | 9826 | 523.91 | 90.12 | 91.49 |
| Preparation Example 4 | 12044 | 520.22 | 88.83 | 90.44 |
| Preparation Example 5 | 7829 | 447.39 | 89.05 | 90.94 |
| Preparation Example 6 | 10520 | 527.03 | 90.27 | 91.30 |
| Preparation Example 7 | 10823 | 472.78 | 90.31 | 91.46 |
| Preparation Example 8 | 4467 | 499.59 | 90.47 | 92.04 |
| Preparation Example 9 | 34172 | 621.50 | 89.82 | 90.69 |
| Preparation Example 10 | 8185 | 501.07 | 88.98 | 90.31 |
| Preparation Example 11 | 10175 | 459.04 | 89.05 | 90.69 |
| Preparation Example 12 | 18242 | 287.52 | 90.33 | 93.72 |
| Preparation Example 13 | 12549 | 249.04 | 90.14 | 93.58 |
| Preparation Example | 54724 | 320.98 | 90.74 | 94.39 |
| 14 | | | | |
| Preparation Example 15 | 4233 | 142.60 | 90.53 | 94.27 |
| Preparation Example 16 | 2087 | 117.16 | 90.42 | 94.03 |
| Preparation Example 17 | 18701 | 166.83 | 90.66 | 93.87 |
| Preparation Example 18 | 5527 | 153.14 | 90.59 | 86.44 |
| Preparation Example 19 | 3709 | 125.92 | 90.98 | 86.84 |
| Preparation Example 20 | 10340 | 211.35 | 90.74 | 86.58 |
| Comparative Preparation Example 1 | 2349 | 197.52 | 89.92 | 85.27 |
| Comparative Preparation Example 2 | 15523 | 502.08 | 85.01 | 84.28 |
| Comparative Preparation Example 3 | 149127 | 157.70 | 85.70 | 86.62 |
| Comparative Preparation Example 4 | 58431 | 227.49 | 84.14 | 82.73 |
| Comparative Preparation Example 5 | 11932 | 379.73 | 89.81 | 87.25 |
| Comparative Preparation Example 6 | 126600 | 300.05 | 90.23 | 92.37 |
| Comparative Preparation Example 7 | 10961 | 133.04 | 90.05 | 86.45 |
| Comparative Preparation Example 8 | 6180 | 171.01 | 90.44 | 85.29 |

As shown in Table 4 above, the slurry viscosities of Preparation Examples 1 to 20 were maintained within a range of 4467 to 54724 mPa·s.

In particular, for the NCM slurry, the viscosity increased stepwise with increasing content of the first monomer unit in Preparation Examples 1 to 3. On the contrary, Comparative Preparation Example 2, where the content exceeded the defined range, exhibited a further increase in viscosity but a decrease in adhesiveness, thereby confirming the importance of the optimal compositional range.

Preparation Examples 4 to 6, in which the content of the first monomer unit was varied within the range of the present disclosure, showed both favorable viscosity and adhesiveness. Furthermore, in cases such as Preparation Examples 7 and 11, where the second monomer unit was selected within an appropriate range, both effective suppression of swelling and suitable viscosity were simultaneously achieved.

Meanwhile, in comparison with Preparation Example 3, Preparation Examples 8 to 10, in which the content of the third monomer unit was varied, exhibited an increase in viscosity with increasing content of the third monomer unit. However, in Comparative Preparation Examples 3 and 4, where the content exceeded the defined range, the excessively high viscosity resulted in non-uniform coating of the slurry on the electrode surface and a potential decrease in adhesiveness.

A similar trend, namely, an increase in viscosity with increasing content of the third monomer unit, was also observed in Preparation Examples 12 to 20 using LFP, NCA, and LCO active materials. Additionally, in comparison with Comparative Preparation Examples 5 to 8 (PVDF), the Preparation Examples employing the binder of the present disclosure exhibited comparable or superior performance in terms of both slurry viscosity and adhesiveness, demonstrating the feasibility of replacing fluorine-based binders.

Accordingly, these results revealed that the binder composition of the present disclosure achieves a balance between slurry viscosity and processability by maintaining the contents of the first, second, and third monomer units within the optimal ranges.

Furthermore, as shown in Table 4 above, the cathode adhesiveness of Preparation Examples 1 to 20 ranged from 447 to 622 gf/25 mm, which is comparable to or higher than those of Comparative Preparation Examples 5 to 8 employing a commercial fluorine-based binder (PVDF).

In the case of the NCM slurry, the adhesiveness improved progressively from Preparation Example 1 to Preparation Example 3 with increasing content of the first monomer unit. However, in Comparative Preparation Example 2, where the content of the first monomer unit exceeded the defined range, the excessively high viscosity resulted in non-uniform coating and a decrease in adhesiveness.

Additionally, Preparation Examples 7 and 11, which included the second monomer unit within an appropriate range, simultaneously achieved suppression of swelling in electrolyte solution and excellent adhesiveness. Preparation Examples 8 to 10, in which the content of the third monomer unit was increased, exhibited improved adhesiveness, whereas Comparative Preparation Examples 3 and 4, where the content of the third monomer unit exceeded the defined range, showed a tendency for decreased adhesiveness due to excessive slurry viscosity.

A similar trend, namely, an increase in viscosity and improvement in adhesiveness with increasing content of the third monomer unit, was also observed in Preparation Examples 12 to 20 using LFP, NCA, and LCO active materials.

Accordingly, these results revealed that the binder of the present disclosure secures stable adhesiveness by maintaining the contents of the first, second, and third monomer units within the optimal ranges.

Additionally, as shown in Table 4 above, the initial coulombic efficiency of the cells of Preparation Examples 1 to 20 ranged from 88.98% to 90.98%, which is comparable to or higher than those of Comparative Preparation Examples 5 to 8 employing a commercial fluorine-based binder (PVDF).

This is believed to arise from the binder of the present disclosure simultaneously achieving an appropriate degree of swelling in electrolyte solution and excellent adhesiveness, thereby minimizing active material loss during the initial charge-discharge process.

For the NCM electrode, Preparation Examples 1 to 11 maintained initial coulombic efficiency and capacity retention at levels comparable to or superior to those of PVDF-based systems. On the contrary, Comparative Preparation Example 1 exhibited a similar initial coulombic efficiency due to insufficient adhesiveness but showed degradation in subsequent cycles, whereas Comparative Preparation Examples 2 to 4 showed reduced initial coulombic efficiency of approximately 85% due to excessive swelling and decreased adhesiveness.

Preparation Examples 12 to 20 using LFP, NCA, and LCO electrodes also maintained initial coulombic efficiencies of 90% or higher, confirming that the binder composition of the present disclosure stably secures high initial charge-discharge efficiency regardless of the type of active material.

Accordingly, these results revealed that the binder in which the contents of the first, second, and third monomer units are controlled within the ranges defined in the present disclosure achieves excellent initial coulombic efficiency by maintaining a balance between electrolyte penetration and interfacial adhesiveness during the initial charge-discharge process.

Additionally, as shown in Table 4 above, the capacity retention (100 cycles) of the cells of Preparation Examples 1 to 20 ranged from 86.44% to 94.39%, which is generally comparable to or higher than that of Comparative Preparation Examples 5 to 8 employing a commercial fluorine-based binder (PVDF).

For the NCM electrode, Preparation Examples 1 to 11 exhibited initial coulombic efficiency and capacity retention both comparable to or higher than those of Comparative Preparation Example 5 using PVDF. This is believed to arise from the acrylic-based binder maintaining an appropriate degree of swelling in electrolyte solution, thereby improving lithium-ion conductivity, while simultaneously providing excellent adhesiveness to securely anchor the active material during repeated charge-discharge processes. On the contrary, Comparative Preparation Example 1 showed similar initial coulombic efficiency but suffered from cycle degradation due to insufficient adhesiveness, whereas Comparative Preparation Examples 2 to 4 exhibited reduced initial coulombic efficiency of approximately 85% and inferior capacity retention due to excessive swelling and decreased adhesiveness.

Similarly, in the case of the LFP, NCA, and LCO electrodes (Preparation Examples 12 to 20), initial coulombic efficiencies of 90% or higher and capacity retentions of 86% or higher were maintained, demonstrating performance comparable to or better than that of Comparative Preparation Examples 6 to 8 employing PVDF. This is believed to arise from the binder of the present disclosure simultaneously achieving an appropriate degree of swelling and excellent adhesiveness regardless of the type of active material, thereby maintaining structural stability of the electrode.

Accordingly, these results revealed that the binder in which the contents of the first, second, and third monomer units are controlled within the ranges defined in the present disclosure achieves excellent capacity retention by maintaining a balance between electrolyte penetration, interfacial adhesiveness, and dimensional stability even after initial charge-discharge cycles.

The scope of the present disclosure is defined by the accompanying claims rather than the description which is presented above, and all of changes and modifications obtained from the meaning and range of claims and equivalent concepts should be construed as being included in the scope of the present disclosure.

## Claims

1. A binder, comprising:
a first monomer unit including a (meth)acrylate-based monomer unit having a linear hydrocarbon side chain with 1 to 12 carbon atoms, a vinyl-based monomer unit having an acyl group, or a combination thereof; and
a second monomer unit including a (meth)acrylate-based monomer unit having a branched hydrocarbon side chain with 3 or more carbon atoms, a cyclic hydrocarbon side chain with 3 or more carbon atoms, or a combination thereof, a vinyl-based monomer unit having one or more aromatic ring side chains, or a combination thereof.

2. The binder of claim 1, wherein the (meth)acrylate-based monomer unit having the cyclic hydrocarbon side chain with 3 or more carbon atoms includes a (meth)acrylate-based monomer unit having an aliphatic cyclic hydrocarbon side chain with 3 or more carbon atoms, a (meth)acrylate-based monomer unit having one or more aromatic ring side chains, or a combination thereof.

3. The binder of claim 1, further comprising:
a third monomer unit including a (meth)acrylate-based monomer unit having a polar functional group substituted with a heteroatom, a vinyl-based monomer unit having a polar functional group substituted with a heteroatom, an α,β-unsaturated dicarboxylic acid-based monomer unit, or a combination thereof,
wherein the polar functional group is a carboxylic acid group (-COOH), a sulfonic acid group (-SO₃H), a phosphonic acid group (-PO₃H₂), a cyano group (-CN), a pyrrolidone group (-C₄H₆NO), an amide group (-CONH₂), a hydroxyl group (-OH), an epoxy group (-C₃H₅O), a caprolactam group (-C₆H₁₀NO), an oxazolidone group (-C₃H₄NO₂), or a combination thereof.

4. The binder of claim 1, wherein the first monomer unit is formed by polymerization of methyl (meth)acrylate, ethyl (meth)acrylate, n-propyl (meth)acrylate, n-butyl (meth)acrylate, n-pentyl (meth)acrylate, n-hexyl (meth)acrylate, n-heptyl (meth)acrylate, n-octyl (meth)acrylate, n-nonyl (meth)acrylate, n-decyl (meth)acrylate, n-undecyl (meth)acrylate, n-lauryl (meth)acrylate, vinyl acetate, or a combination thereof.

5. The binder of claim 2, wherein the (meth)acrylate-based monomer unit having the branched hydrocarbon side chain with 3 or more carbon atoms, aliphatic cyclic hydrocarbon side chain with 3 or more carbon atoms, or a combination thereof, is formed by polymerization of iso-propyl (meth)acrylate, iso-butyl (meth)acrylate, iso-pentyl (meth)acrylate, tert-butyl (meth)acrylate, neopentyl (meth)acrylate, 2-ethylhexyl (meth)acrylate, iso-octyl (meth)acrylate, iso-nonyl (meth)acrylate, iso-decyl (meth)acrylate, iso-lauryl (meth)acrylate, cyclopentyl (meth)acrylate, cyclohexyl (meth)acrylate, isobornyl (meth)acrylate, dicyclopentadienyl (meth)acrylate, tetrahydrofurfuryl (meth)acrylate, or a combination thereof,
the (meth)acrylate-based monomer unit having one or more aromatic ring side chains is formed by polymerization of benzyl (meth)acrylate, phenyl (meth)acrylate, 3-phenoxybenzyl (meth)acrylate, o-phenylphenoxyethyl (meth)acrylate, 1-naphthyl (meth)acrylate, or a combination thereof, and
the vinyl-based monomer unit having one or more aromatic ring side chains is formed by polymerization of styrene, α-methylstyrene, or a combination thereof.

6. The binder of claim 3, wherein the third monomer unit is formed by polymerization of methacrylic acid, acrylic acid, N-vinylpyrrolidone, acrylonitrile, 2-hydroxyethyl methacrylate, 2-hydroxyethyl acrylate, acrylamide, N,N-dimethylacrylamide, glycidyl methacrylate, N-vinylcaprolactam, 2-oxazolidin-5-yl methacrylate, 2-cyanoethyl methacrylate, 2-acrylamido-2-methylpropane sulfonic acid, carboxyethyl acrylate, maleic acid, itaconic acid, fumaric acid, aconitic acid, vinylbenzoic acid, vinyl sulfonic acid, 4-styrenesulfonic acid, vinyl phosphonic acid, N-methyl acrylamide, or a combination thereof.

7. The binder of claim 3, wherein the binder includes 20 to 80 mol% of the first monomer unit, 20 to 80 mol% of the second monomer unit, and 0 to 15 mol% of the third monomer unit, based on a total of 100 mol% of the first monomer unit, the second monomer unit, and the third monomer unit.

8. The binder of claim 1, wherein the binder has a degree of swelling of 20% to 95% when the binder is immersed in an electrolyte solution at 40°C to 80°C for 2 to 6 hours.

9. A slurry, comprising:
the binder of any one of claims 1 to 8; and
an active material.

10. An electrode, comprising:
a current collector; and
an active material layer formed on the current collector and including the binder of any one of claims 1 to 8.

11. A secondary battery, comprising:
the electrode of claim 10.
